# EUROPEAN PATENT SPECIFICATION

(11) **EP 4 565 961 B1**
(45) Date of publication and mention of the grant of the patent: **04.11.2026**
(21) Application number: 22787120.9
(22) Date of filing: 09.09.2022
(51) Int. Cl.: G06F 12/123, G06F 12/0855, G06F 12/0864, G06F 12/0895

(54) **LOW-LATENCY CACHE**
CACHE MIT NIEDRIGER LATENZ
CACHE À FAIBLE LATENCE

(43) Date of publication of application: 11.06.2025
(73) Proprietor: Google LLC, Mountain View, CA 94043 (US)
(72) Inventor: SEELAM, Ganesh Manikanta Sai Pavan Kumar, Mountain View, California 94043 (US); KASHYAP, Raj Shekhar, Mountain View, California 94043 (US); ANANTHANARAYANAN, Venkateswaran, Mountain View, California 94043 (US); RAJAPPA, Thierry Gloude, Mountain View, California 94043 (US); RAMASAMY, Vigneshwara Manikandan, Mountain View, California 94043 (US)
(74) Representative: Marks & Clerk GST
(86) International application number: PCT/US2022/076150
(87) International publication number: WO 2024/054232

(56) References cited:
- US-A1- 2013 042 068
- US-B1- 6 745 291

## Description

### BACKGROUND

This specification relates to systems having integrated circuit devices.

A cache is a device that stores data retrieved from memory or data to be written to memory for one or more different hardware devices in a system. The hardware devices can be different components integrated into a system on a chip (SOC). In this specification, the devices that provide read requests and write requests through caches will be referred to as client devices. Some caches service memory requests for multiple different client devices integrated into a single system.

Caches can be used to reduce power consumption by reducing overall requests to the main memory. In addition, as long as client devices can access the data they need in the cache, power can further be saved by placing the main memory as well as data paths to the main memory in a low-power state. Therefore, cache usage is correlated with overall power consumption, and increasing cache usage results in a decrease in overall power consumption. Therefore, devices that rely on battery power, e.g., mobile computing devices, can extend their battery life by increasing cache usage for the integrated client devices.

A cache placement policy determines how a memory block is placed in the cache. For a set-associative cache, a least recently used (LRU) replacement policy can be used. In order to implement the LRU replacement policy, the cache system needs to read LRU data that stores the recency information of the cache lines in a set. The reading of the LRU data can be time consuming and cause latency of cache transactions.

Document US 6745291B1 discloses a set-associative cache which performs tag miss handling concurrently with the determination of the cache line least recently used.

### SUMMARY

This specification describes a cache system that implements a low-latency LRU replacement policy in multiple stages for a transaction.

In one particular aspect of the specification, a cache system is provided. The cache system includes multiple sets with each set having multiple respective ways and replacement logic configured to implement an LRU replacement policy based on an LRU replacement computation in multiple stages for a transaction. The multiple stages include: a first stage in which the cache reads tag data for the transaction and makes a hit determination based on the tag data, a second stage in which the cache reads LRU data for the transaction, a third stage in which the cache performs an LRU replacement computation, wherein upon the hit determination being a hit, the cache is configured to provide resulting cache data before the third stage is complete.

In some implementations of the cache system, upon the hit determination being a miss, the cache is configured to issue a read request to memory before the third stage is complete.

In some implementations of the cache system, the multiple stages includes an additional stage that occurs between the second stage and the third stage during which the cache waits for the LRU data to be read.

In some implementations of the cache system, the cache system includes a tag data table that is separate from an LRU data table, wherein the tag data table is configured to store tag data, and wherein the LRU data table is configured to store LRU data.

In some implementations of the cache system, the tag data table and the LRU data table are implemented in separate memory devices.

In some implementations of the cache system, the replacement logic is configured to: maintain attribute data for two previous transactions including a first transaction and a second transaction, wherein the first transaction precedes the second transaction and the second transaction precedes a current transaction; and resolve a hazard condition for making the hit determination for the current transaction based on the attribute data.

In some implementations of the cache system, to resolve the hazard condition, the cache system is configured to: upon the hit determination being a hit for the current transaction, determine if the attribute data for the first transaction meets a first condition, the first condition at least indicating that the first transaction will allocate an LRU way and the way information is still pending; in response to determining that the attribute data for the first transaction meets the first condition, determine the hit determination for the current transaction as pending.

In some implementations of the cache system, to resolve the hazard condition, the cache system is configured to: in response to determining that the attribute data for the first transaction does not meet the first condition, determine if the attribute data for the second transaction meets a second condition, the second indication at least indicating that the second transaction has allocated an LRU way that matches a HIT way of the current transaction; in response to determining that the second transaction meets the second condition, determine the hit determination for the current transaction as a miss; and in response to determining that the second transaction does not meet the second condition, determine the hit determination for the current transaction as a hit.

In some implementations of the cache system, to resolve the hazard condition, the cache system is configured to: upon the hit determination being a miss for the current transaction, determine if the attribute data for the first transaction meets a third condition, the third condition at least indicating that the first transaction has a same tag portion of the address as the current transaction and the first transaction will allocate an LRU way; and in response to determining that the attribute data for the first transaction meets the third condition, determine the hit determination for the current transaction as a hit.

In some implementations of the cache system, to resolve the hazard condition, the cache system is configured to: in response to determining that the attribute data for the first transaction does not meet the third condition, determine if the attribute data for the second transaction meets a fourth condition, the fourth indication at least indicating that the second transaction has a same tag portion of the address as the current transaction and the second transaction will allocate an LRU way; in response to determining that the second transaction meets the fourth condition, determine the hit determination for the current transaction as a hit; and in response to determining that the second transaction does not meet the fourth condition, determine the hit determination for the current transaction as a miss.

In another aspect of the present specification, a method provided. The method is performed by the cache system described above and includes the operations described above.

The subject matter described in this specification can be implemented in particular implementations so as to realize one or more advantages. For example, the cache system passes the HIT/MISS result to downstream processing without waiting for the reading of the LRU data to complete. This reduces the latency of the cache transaction and thus improves the time efficiency of the cache system. Further, in some implementations, the system stores the tag data and the LRU data in separate memory devices which provides improved design flexibility within cost or resource restraint.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A shows an example of a cache system.
FIG. 1B shows examples of memory devices storing tag data and LRU data.
FIG. 2 is a flow chart illustrating an example process for performing a cache transaction.
FIG. 3 illustrates an example process for performing a cache transaction.
FIG. 4A illustrates signal waveforms during an example process for performing a cache transaction.
FIG. 4B illustrates signal waveforms during another example process for performing a cache transaction.
FIG. 5A illustrates signal waveforms during an example process for performing two cache transactions.
FIG. 5B illustrates signal waveforms during another example process for performing two cache transactions.
FIG. 6 is a flow chart illustrating an example process for performing hazard resolution for a current transaction.

Like reference numbers and designations in the various drawings indicate like elements.

### DETAILED DESCRIPTION

A cache placement policy determines how a memory block is placed in the cache. This specification focuses on the set-associative cache placement policy, where the cache is divided into multiple sets and each set includes multiple cache lines.

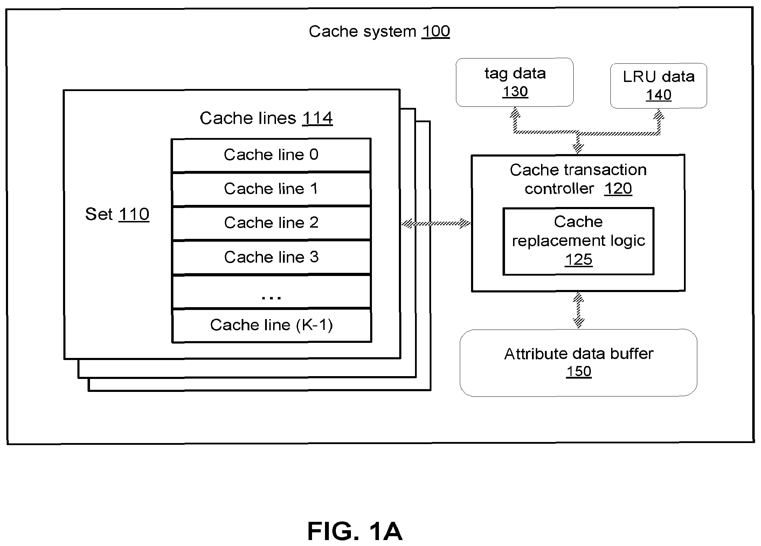

FIG. 1A shows a cache system 100. The cache system 100 may be a part of a processing system, such as a system on a chip (SOC) communicatively coupled to memory devices. In particular, the cache system 100 is a set-associative cache and includes multiple sets 110. Each set 110 includes multiple respective cache lines 114.

A cache line, also known as a way, is the unit of data transfer between the cache and another memory device, e.g., the main memory of the processing system. All cache lines in the set have a fixed size, e.g., 64 bytes. A processor will read or write an entire cache line when any location in the 64-byte region is read or written.

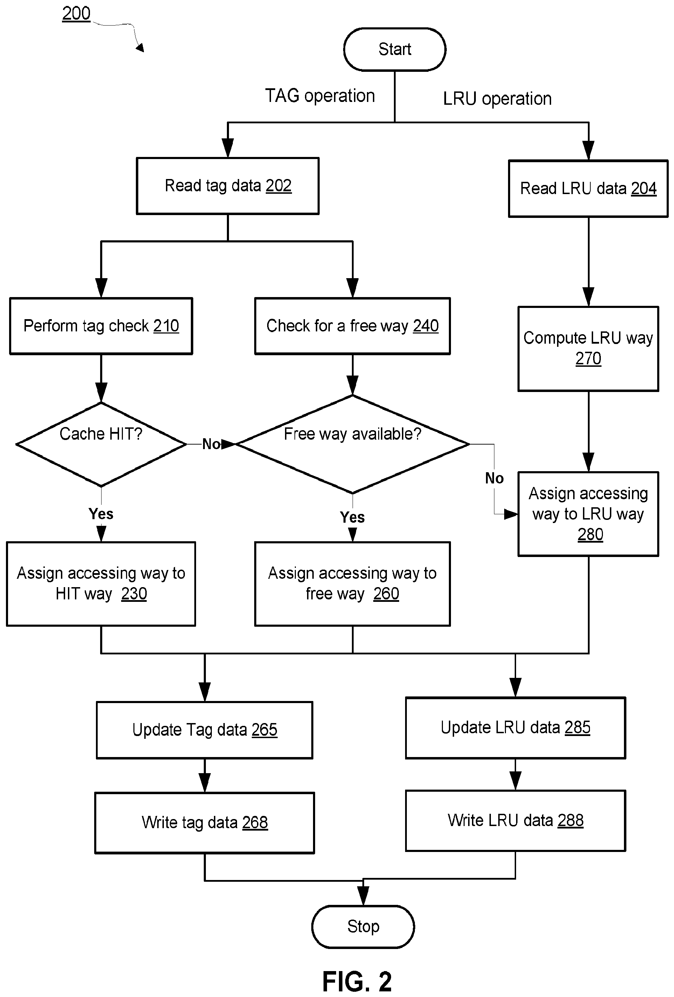

The cache system 100 further includes a cache transaction controller 120 that manages cache transactions of the cache system 100. In this specification, a cache transaction refers to a process of accessing the cache system with a request for a specific memory block. An example cache transaction process will the described with reference to FIG. 2. In general, the cache transaction controller 120 maps the requested memory block to a specific set 110 using the index bits derived from the address of the memory block. The cache transaction controller 120 then performs a tag check to determine whether the requested memory block is already placed in one of the cache lines 110. The tag check is performed based on the tag data 130 that stores the tags of all the cache lines 114 of the memory device. In particular, the cache transaction controller 120 compares the tag bits of the address of the memory block with the tags of the cache lines 114 in the mapped set 110. The tag check returns a "cache hit" if the memory block tag matches any of the cache lines in the mapped set. Otherwise, the tag check returns a "cache miss".

In case of a "cache miss", the cache transaction controller 120 requests the memory block from another memory device, such as from the main memory of the processing system or from the next-level cache of the processing system, and places the memory block in a selected cache line 114 of the mapped set 110. If all the cache lines 114 in the mapped set 110 have already been allocated (i.e., have been previously placed with respective memory blocks), the cache transaction controller 120 uses the new data read from the external memory device to replace the block stored in a cache line identified through a replacement policy.

In particular, cache transaction controller 120 uses the cache replacement logic 125 to implement a least recently used (LRU) replacement policy that selects the least recently used cache line (out of K-ways) for replacement. This process requires keeping track of the recency of each cache line 114 with respect to the usage of all the other cache lines in a particular set 110. Thus, the system 100 maintains the LRU data 140 that specifies the recency information for each cache line 114 in each set 110 of the system 100.

In summary, the cache transaction controller 120 controls the system 100 to perform the cache transaction in several stages, including reading the tag data 130 for the transaction and making a HIT/MISS determination, reading LRU data 140 for the transaction, and performing the LRU replacement computation.

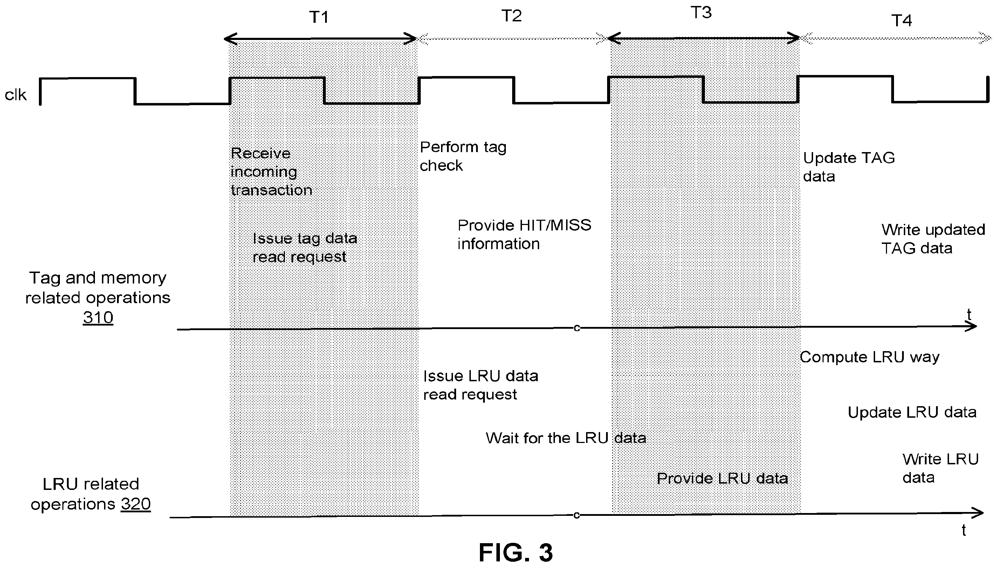

In order to improve time efficiency of the cache transaction, the system can arrange the timeline for starting the different operations in the process to minimize latency. An example of the timelines for the operations will be described with reference to FIG. 3. In general, to reduce latency caused by reading the LRU data 140, upon the hit determination being a hit, the cache system is configured to provide resulting cache data before the stage of performing the LRU replacement computation is complete. Further, in some implementations, upon the hit determination being a miss, the cache system is configured to issue a read request to memory before the stage of performing the LRU replacement computation is complete.

**Table 1. Tag data and LRU data for a cache line**

| **Field** | **No. of bits** | **Description** |
|---|---|---|
| **TAG data for a particular cache line** | | |
| Valid | 1 | Indicates if the cache-line has a valid allocation |
| Tag | ADDR_TAG_WIDTH | Indicates the tag-portion of the address of the allocated cache-line |

| **LRU data for a particular cache line** | | |
|---|---|---|
| Recency of the Usage | log₂(K) | Indicates how recent the last usage was with respect to the last usages of the other ways of the same set. |

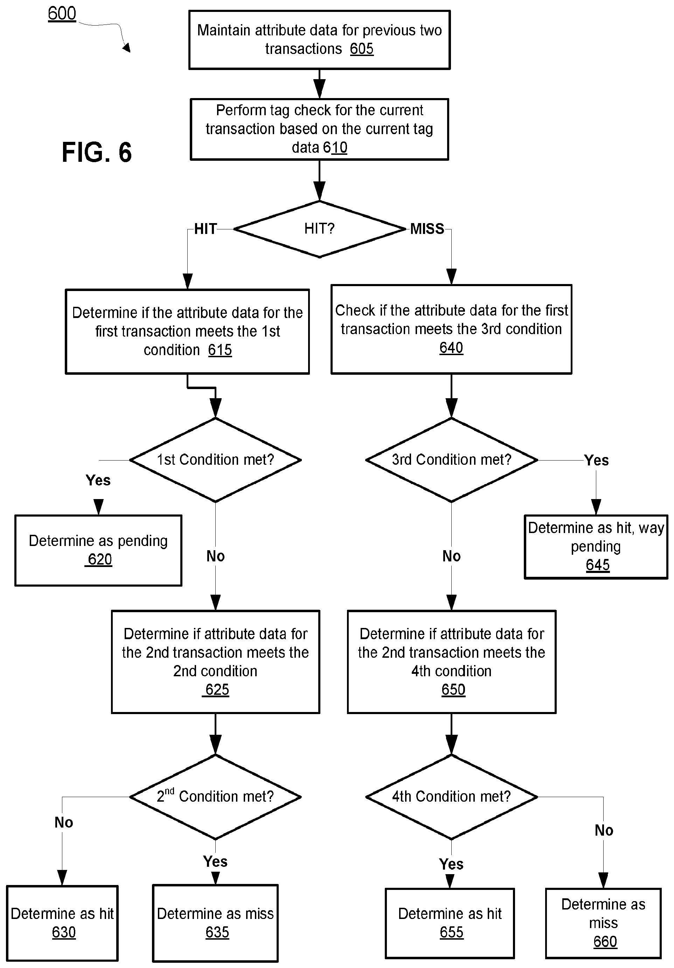

In some implementations, the cache system 100 further includes a data buffer 150 for storing attribute data for previous transactions. The cache transaction controller 120 uses the attribute data to resolve hazards in determining the HIT/MISS for the current transaction. An example process for resolving the hazard using the attribute data will be described in detail with respect to FIG. 6.

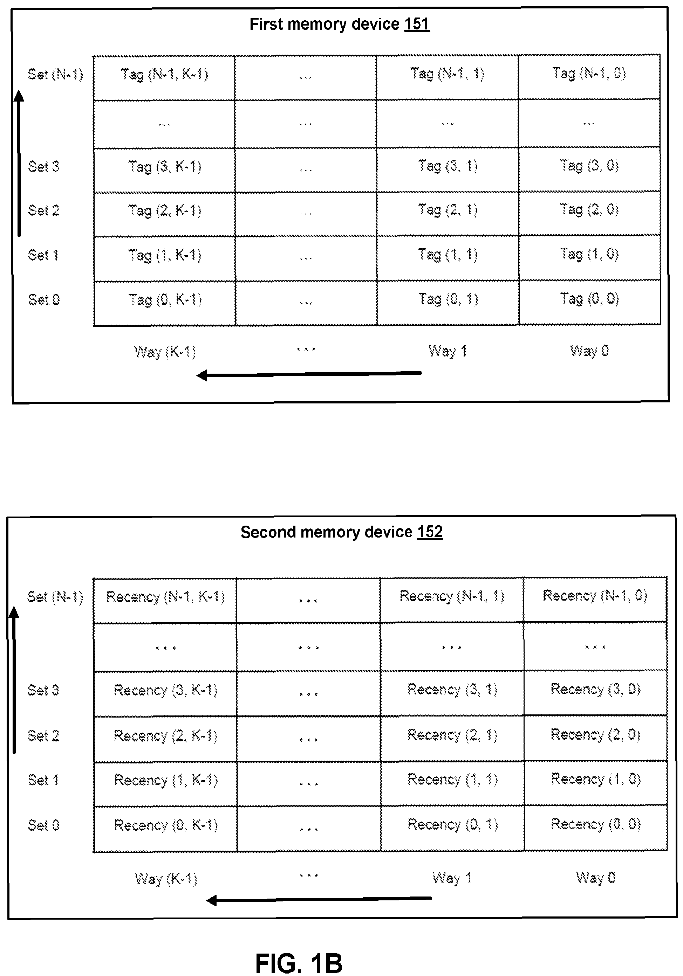

Table 1 shows an example of the data fields of the tag data 130 and the LRU data 140 for a particular cache line. When there are a large number of sets and cache lines in the cache system, the tag data 130 and the LRU data 140 can take up significant storage space. In some implementations, the tag data 130, and the LRU data 140 are stored separately from each other. For example, as shown in FIG. 1B, the tag data 130 and the LRU data 140 can be stored in two different memory devices, i.e., the first memory device 151 and the second memory device 152, respectively. For example, the first memory device 151 can be a first random access memory (RAM) and the second memory device 152 can be a second RAM.

Also as shown in FIG. 1B, the tag data 130 can be organized into a first table stored in the first memory device, and the LRU data 140 can be organized into a second table stored in the second memory device 152. The first table can be an *N* × *K* table for storing tag information for *N* sets with each set having *K* cache lines. Each cell in the first table stores the tag for a particular cache line in a particular set. Similarly, the second table is also an *N* × *K* table for storing recency information with each cell storing the recency of a particular cache line in a particular set.

Storing the tag data 130 and the LRU data 140 in separate memory devices can provide improved design flexibility within cost or resource restraint. A well-designed memory system handles significantly more cache HITs than cache MISSes for typical operations. Since cache HITs do not require writing to the stored tag data, a tag write occurs much less frequently than tag reads. By contrast, the reading and writing of the LRU data are more balanced. Accordingly, to optimize the cost-performance ratio of the system design, the tag data can be stored in a single port RAM while the LRU data can be stored in a dual-port RAM.

FIG. 2 illustrates an example process 200 for performing a cache transaction. For convenience, the process 200 will be described as being performed by a cache system, such as the cache system 100 of FIG. 1A.

Before performing the process 200, the system has determined the set for the cache transaction. The output of the process 200 specifies a particular cache line identified by the "accessing way" in the set for accessing the memory block specified in the cache transaction request.

After receiving the cache transaction request specifying the memory block, the system reads the tag data in step 202 and reads the LRU data in step 204. The system performs a tag check in step 210. In particular, the system compares the tag bits associated with the address of the memory block with the tags of the cache lines in the set.

The system determines whether the tag check results in a cache HIT or MISS in step 210. That is, if the tag bits associated with the address of the memory block match the tag of one of the cache lines in the set, the system determines that the tag check result is a cache HIT. For convenience, the cache line that has the tag matching the memory block tag is termed as "HIT way". If the tag bits associated with the address of the memory block do not match any of the tags of the cache lines in the set, the system determines that the tag check result is a MISS.

If the system determines that the tag check result is a cache HIT, the system uses the HIT way for the transaction, and thus assigns the accessing way to the HIT way in step 230.

If the system determines that the tag check result is a cache MISS, this means that the data in the specified memory block has not been loaded into any of the cache lines in the set, and the system needs to request the data from the next level in the memory hierarchy, and load the data into a selected cache line in the set.

The system checks for a cache line in the set that has not been occupied in step 240. For convenience, an unoccupied cache line is termed the "free way". If the system determines that a free way is available in step 240, the system uses the free way for performing the transaction for the cache MISS scenario. That is, the system assigns the accessing way to the free way in step 260.

If the system determines that a free way is not available in step 240, this means that all the cache lines in the set have been occupied, and the system needs to identify a cache line for replacement through the replacement policy, and place the data in the cache line identified for replacement.

Since the system implements the LRU replacement policy, the system computes the LRU way in step 270. This includes reading the LRU data and determining the LRU way based on the LRU data. The system assigns the accessing way to the LRU way in step 280.

Once the accessing way is determined (by steps 230, 260, or 280), the system updates the LRU data in step 285, then writes the LRU data to the second memory device in step 288. The system further updates the tag data in step 265, and writes the tag data to the first memory device in step 268.

In order to improve time efficiency of the process 200, the system can arrange the timeline for starting the different operations in the process to minimize latency. The step of computing the LRU way (step 270) typically takes more time than determining the HIT or MISS (step 210). Step 270 also takes longer than selecting a free way (steps 240). As an example, the computing of the LRU way may need to take 2 clock cycles to complete while determining HIT/MISS or selecting the free way can be fit into a single clock cycle. This is in part because the LRU data is stored in the second memory device which may take more time to read from.

In some implementations, in order to reduce the latency of the cache transaction, once the cache transaction controller determines a HIT/MISS result in step 210, the system can pass the HIT/MISS determination to downstream processing without waiting for the reading of the LRU data to complete. For example, upon the HIT/MISS determination being a hit, without waiting for the LRU data to finish being read, the system can begin the process of retrieving the cache data stored in the HIT way to provide the resulting cache data for the transaction. By starting retrieving the cache data early, the cache data from the HIT way can be available to the system earlier in time, e.g., before the LRU replacement computation is finished. In another example, upon the HIT/MISS determination being a miss, without waiting for the LRU data to finish being read, the system issues a read request to the next level of memory hierarchy. This strategy can effectively reduce latency of the cache transaction since reading data from the next level of memory hierarchy can take a significant amount of time.

FIG. 3 shows an example timeline for performing operations, including tag and memory related operations 310 and LRU data related operations 320, for a cache transaction to illustrate how the operations can fit into the clock cycles. The timeline is divided into 4 consecutive time segments, T1, T2, T3, and T4. Each time segment can correspond to one or more clock cycles.

As shown in FIG. 3, during the first time segment T1, the system receives the incoming transaction and issues a tag data read request to read the tag data of all cache lines belonging to the set that is associated with the incoming transaction. Table 2 shows examples of signals being processed during the first time segment.

**Table 2. Signals being processed during the first time segment**

| **signal** | **WIDTH** | **Direction** | **Description** |
|---|---|---|---|
| **T1** | | | |
| in_t1_tvalid | 1 | Input | When high, indicates an incoming transaction |
| in_t1_tag | ADDR_TAG_WIDTG | Input | Tag part of the adress of the transaction |
| in_t1_indez | ADDR_INDEX_WIDTH | Input | Intex/set part of the address of the transaction |
| in_t1_allocate | | 1 Input | When high, indicates that the transaction needs to be allocated in case it results in |

During the second time segment T2, the system issues LRU data read request to read the LRU data of all cache lines belonging to the set that is associated with the incoming transaction. Note that the LRU data read operation is delayed for one time segment compared to the tag read operation. This is to take into consideration that it may take more time for the incoming transaction's attribute data to be passed to the second memory device storing the LRU data.

The tag data is available in T2. The system performs the tag check in this segment and then provides the HIT/MISS determination result as an output to subsequent processing logic. For example, upon the HIT/MISS determination being a hit, without waiting for the LRU data to finish being read, the system can begin the process of retrieving the cache data stored in the HIT way to provide the resulting cache data for the transaction. In another example, upon the HIT/MISS determination being a miss, without waiting for the LRU data to finish being read, the system can issue a read request to the next level of memory hierarchy. These strategies can effectively reduce latency of the cache transaction. Table 3 shows examples of signals being processed during the second time segment.

After the LRU data read request has been issued, the system waits for the LRU data, which will become available in the third segment T3. The system provides the LRU data for LRU way computation after the LRU data is available from the reading operation.

During the fourth segment T4, the system computes the LRU way, updates the LRU data, and writes the updated LRU data into the second memory device. The system also updates the TAG data and writes the updated TAG data into the first memory device. The system also outputs data such as the final HIT/MISS status and the way information. Table 4 shows examples of signals being processed during the fourth time segment.

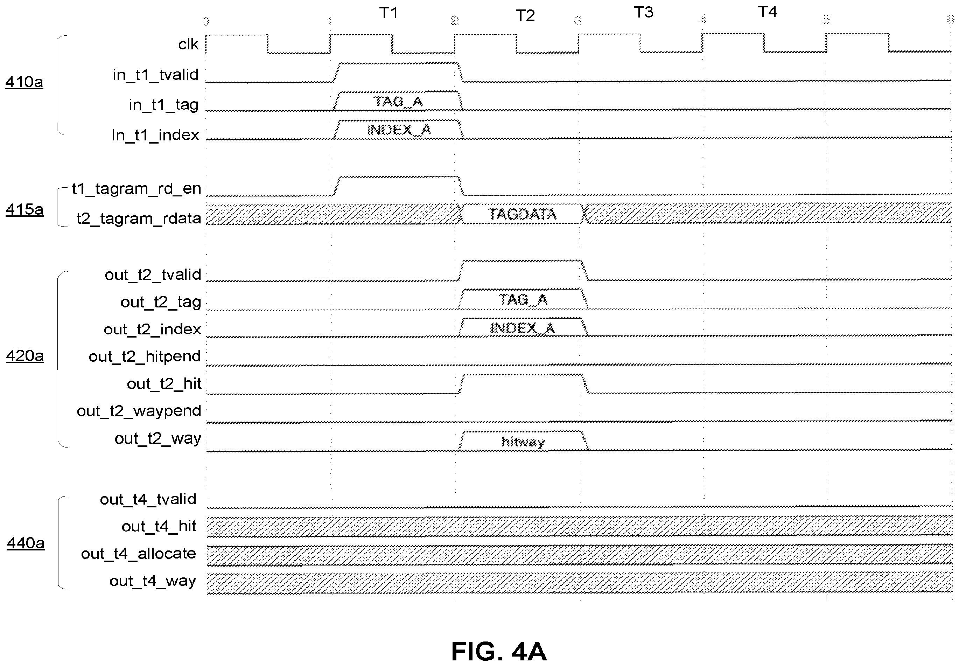

FIG. 4A illustrates signal waveforms for input signals in T1 (410A), internal signals (415A), output singles in T2 (420A), and output signals in T4 (440A) during an example process for performing a cache transaction where the HIT/MISS determination returns a HIT. As shown in FIG. 4A, during T2, the system outputs the HIT determination and the HIT way.

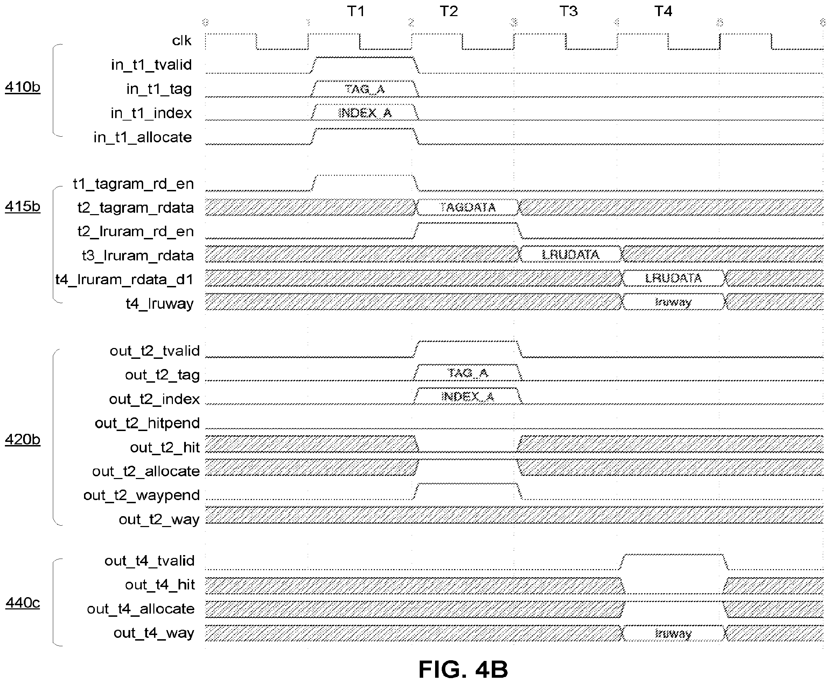

FIG. 4B illustrates signal waveforms for input signals in T1 (410B), internal signals (415B), output singles in T2 (420B), and output signals in T4 (440B) during an example process for performing a cache transaction where the HIT/MISS determination returns a MISS. As shown in FIG. 4B, during T2, the system outputs data to indicate a MISS determination and a "way pending" indication without waiting for the LRU data to be available in T4. During T4, the system obtains the LRU data and outputs the LRU way.

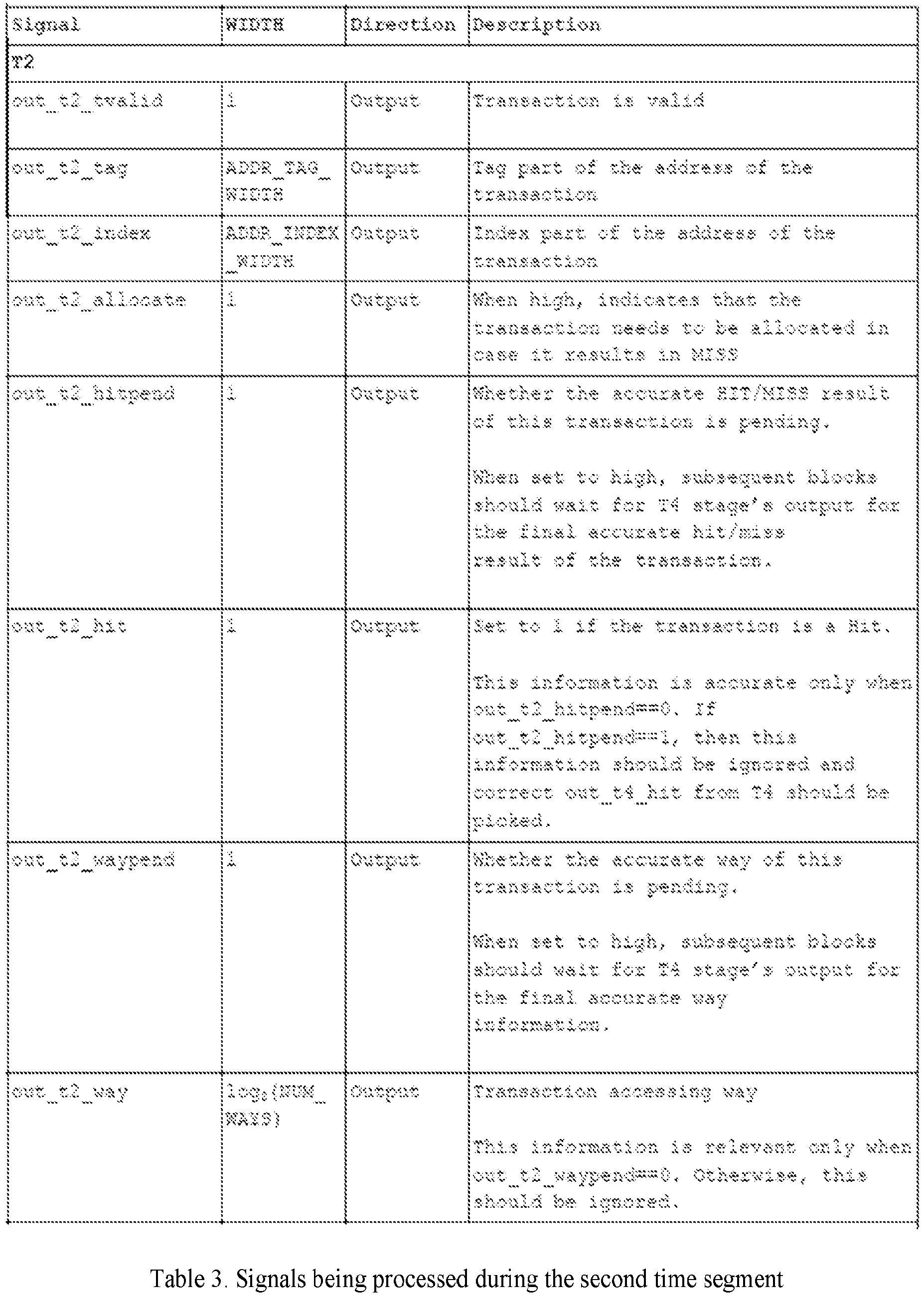

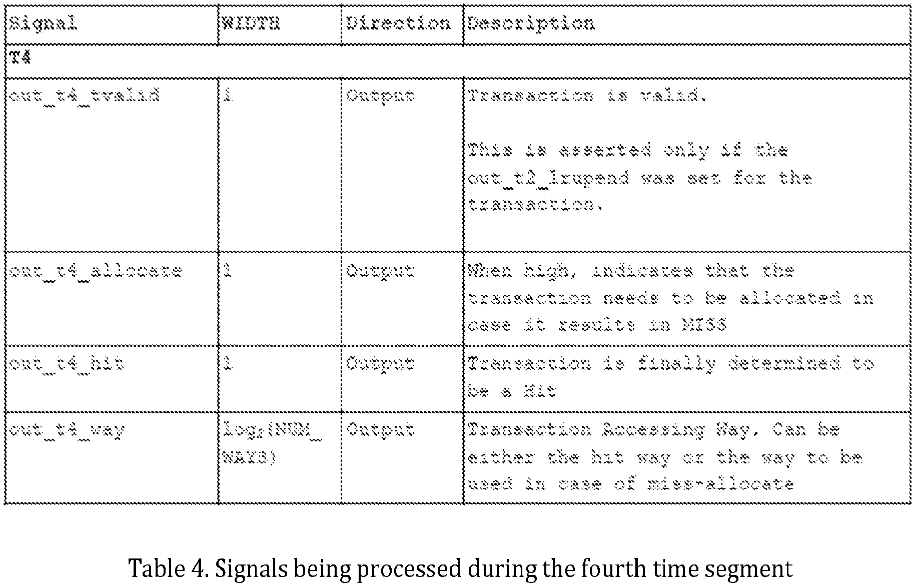

By arranging the operations in the cache transaction as described above with references to FIG. 3, FIG. 4A, and FIG. 4B, the system can reduce latency caused by waiting for the LRU data to be available. However, when determining the HIT/MISS result during the current transaction at T2, if the current transaction overlaps with previous transactions in time (e.g., when a previous transaction is being executed at T3 or T4), and if the overlapping previous transactions are mapped to the same set with the current application, a hazard may occur. This is because, when the first transaction (say, transaction 1) has a MISS determination and it progresses into T4, two subsequent transactions (say, transaction 2 which has progressed to T3 and transaction 3 which has progressed to T2) mapped to the same set may have their HIT/MISS indication data depending upon transaction 1's accessing way, which may result in a hazard.

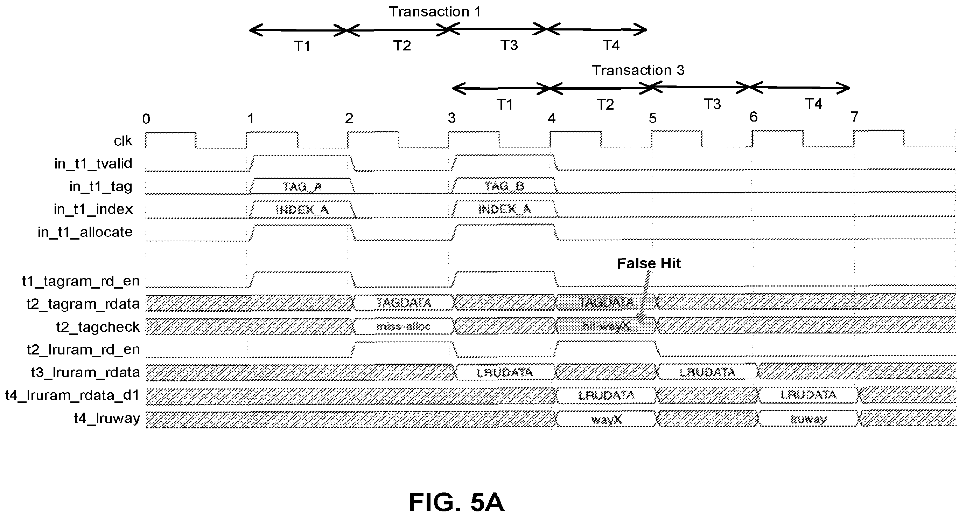

In one example, as shown in FIG. 5A, for a current transaction (e.g., transaction 3) that determines a HIT result based on the current TAG data, the particular "HIT way" determined based on the TAG data may have been a false HIT because a previous transaction (e.g., transaction 1) may have allocated the particular HIT way for a different memory block.

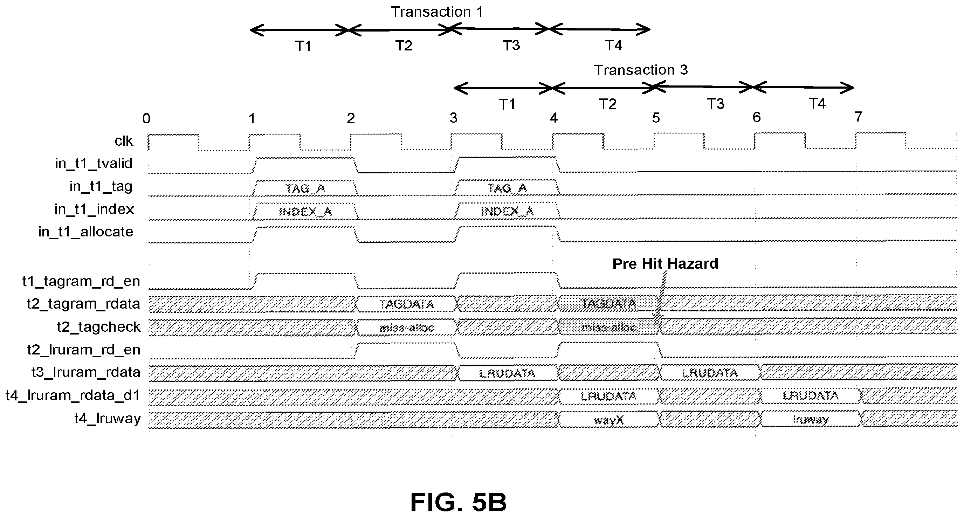

In another example, as shown in FIG. 5B, for a current transaction (e.g., transaction 3) that determines a MISS result based on the current TAG data, the correct HIT/MISS determination could have in fact been a HIT because a previous transaction (e.g., transaction 1) may have been a MISS-allocate and is waiting for the LRU data to provide the way for allocation.

The reason for the hazard conditions described above is that the up-to-date TAG data of the previous two transactions was not updated at the time the current transaction is making the HIT/MISS determination, as the LRU way is still pending for the previous transactions. And, if such cases are not detected or scoped out in T2 and only tag lookup is considered, then wrong conclusions about hit/miss could be made. Here, note that hazards can happen only due to the "previous two transactions".

FIG. 6 is a flow chart illustrating an example process for performing hazard resolution for a current transaction. For convenience, the process 600 will be described as being performed by a cache system, such as the cache system 100 of FIG. 1A.

Hazards can occur during the T2 segment of the current transaction when making the HIT/MISS determination. In order to make sure the HIT/MISS determination produces reliable results, the system needs to keep track of the attribute data for two previous transactions. Thus, the system maintains attribute data for the previous two transactions (as shown in step 605). The previous two transactions include a first transaction and a second transaction where the first transaction precedes the second transaction. That is, the first transaction is two time segments ahead of the current transaction and the second transaction is one time segment ahead of the current transaction. When the current transaction proceeds to T2, the first transaction proceeds to T4, and the second transaction proceeds to T3. Table 5 shows an example of the attribute data that is maintained for a previous transaction.

In step 610, the system performs tag check for the current transaction based on the current tag data. Note that the current data may still be updated by one of the previous transactions.

If the determination returns a HIT, in step 615, the system determines if the attribute data for the first transaction meets a first condition. The first condition indicates that (1) the first transaction is valid, (2) the first transaction has the same set index as the current transaction, (3) the first transaction has a different tag portion of the transaction's address from the current transaction, and (4) the first transaction will allocate an LRU way and the way information is still pending.

**Table 5 Attribute data maintained for a previous transaction**

| **Field** | **No, of bits** | **Description** |
|---|---|---|
| Valid | 1 | Indicates if the entry is valid |
| Index | ADDR_INDEX_WIDTH | Index part of the transaction's address |
| Tag | ADDR_TAG_WIDTH | Tag part of the transaction's address |
| allocate | 1 | Allocate attribute of the transaction |
| Way Pending(e.g, WP) | 1 | Indicates if way info for the transaction is pending |
| T2 stage's Hit/ Miss result | 1 | Indicates if the transaction is a hit |
| Way | log₂(NUM_WAYS) | Way with which the transaction is associated |

If the system determines that the attribute data for the first transaction meets the first condition, the system determines, in step 620, that the HIT/MISS status of the current transaction as pending. The system will wait for the previous transactions to complete to determine the final HIT/MISS status of the current transaction.

If the system determines that the attribute data for the first transaction does not meet the first condition, the system determines, in step 625, if the attribute data for the second transaction meets a second condition. The second condition indicates that (1) the second transaction is valid, (2) the second transaction has the same set index as the current transaction, (3) the second transaction has a different tag portion of the transaction's address from the current transaction, and (4) the second transaction has allocated an LRU way that matches the HIT way of the current transaction.

If the system determines that the attribute data for the second transaction meets the second condition, the system determines, in step 635, the HIT/MISS status of the current transaction as MISS.

If the system determines that the attribute data for the second transaction does not meet the second condition, the system determines, in step 630, the HIT/MISS status of the current transaction as HIT.

If the determination returns a MISS, in step 640, the system determines if the attribute data for the first transaction meets a third condition. The third condition indicates that (1) the first transaction is valid, (2) the first transaction has the same set index as the current transaction, (3) the first transaction has the same tag portion of the transaction's address as the current transaction, (4) the first transaction will allocate an LRU way and the way information is still pending.

If the system determines that the attribute data for the first transaction meets the third condition, the system determines, in step 645, the HIT/MISS status of the current transaction as HIT but that the way information is pending. The system will wait for the first transaction to determine the LRU way (in T4), and assign the LRU way as the HIT way for the current transactions.

If the system determines that the attribute data for the first transaction does not meet the third condition, the system determines, in step 650, if the attribute data for the second transaction meets a fourth condition. The fourth condition indicates that (1) the second transaction is valid, (2) the second transaction has the same set index as the current transaction, (3) the second transaction has the same tag portion of the transaction's address as the current transaction, and (4) the second transaction has allocated an LRU way.

If the system determines that the attribute data for the second transaction meets the fourth condition, the system determines, in step 655, the HIT/MISS status of the current transaction as HIT and assigns the HIT way of the current transaction as the LRU way of the second transaction.

If the system determines that the attribute data for the second transaction does not meet the fourth condition, the system determines, in step 660, the HIT/MISS status of the current transaction as MISS.

Since the process 600 takes into account the attributes of the previous two transactions, the hazard in determining the HIT/MISS status of the current transaction can be properly resolved.

As discussed above, the system to reduces the latency of the cache transaction and thus improves the time efficiency of the cache system, the cache system can pass the HIT/MISS result to downstream processing without waiting for the reading of the LRU data to complete. The system can implement a process to resolve any hazard caused by starting multiple transactions in consecutive clock cycles.

Embodiments of the subject matter and the functional operations described in this specification can be implemented in digital electronic circuitry, in tangibly-embodied computer software or firmware, in computer hardware, including the structures disclosed in this specification or in combinations of one or more of them Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification or in combinations of one or more of them Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A cache comprising:
multiple sets (110) with each set having multiple respective ways; and replacement logic (125) configured to implement an LRU replacement policy based on an LRU replacement computation in multiple stages for a transaction, the multiple stages comprising:
a first stage in which the cache reads tag data for the transaction and makes a hit determination based on the tag data,
a second stage in which the cache reads LRU data for the transaction,
a third stage in which the cache performs an LRU replacement computation,
wherein upon the hit determination being a hit, the cache is configured to provide resulting cache data before the third stage is complete;
**characterized in that** the replacement logic is configured to: maintain attribute data (150) for two previous transactions including a first transaction and a second transaction, wherein the first transaction precedes the second transaction and the second transaction precedes a current transaction; and
resolve a hazard condition for making the hit determination for the current transaction based on the attribute data, wherein resolving the hazard condition comprises:
upon the hit determination being a hit for the current transaction, determining if the attribute data for the first transaction meets a first condition, the first condition at least indicating that the first transaction will allocate an LRU way and the way information is still pending; and
in response to determining that the attribute data for the first transaction meets the first condition, determining the hit determination for the current transaction as pending.

2. The cache of claim 1, wherein upon the hit determination being a miss, the cache is configured to issue a read request to memory before the third stage is complete.

3. The cache of claim 1, wherein the multiple stages comprise an additional stage that occurs between the second stage and the third stage during which the cache waits for the LRU data to be read.

4. The cache of claim 1, wherein the cache comprises a tag data table that is separate from an LRU data table, wherein the tag data table is configured to store tag data, and wherein the LRU data table is configured to store LRU data.

5. The cache of claim 4, wherein the tag data table and the LRU data table are implemented in separate memory devices.

6. The cache of claim 1, wherein resolving the hazard condition further comprises:
in response to determining that the attribute data for the first transaction does not meet the first condition, determining if the attribute data for the second transaction meets a second condition, the second indication at least indicating that the second transaction has allocated an LRU way that matches a HIT way of the current transaction;
in response to determining that the second transaction meets the second condition, determining the hit determination for the current transaction as a miss; and
in response to determining that the second transaction does not meet the second condition, determining the hit determination for the current transaction as a hit.

7. The cache of claim 1, wherein resolving the hazard condition comprises:
upon the hit determination being a miss for the current transaction, determining if the attribute data for the first transaction meets a third condition, the third condition at least indicating that the first transaction has a same tag portion of the address as the current transaction and the first transaction will allocate an LRU way; and
in response to determining that the attribute data for the first transaction meets the third condition, determining the hit determination for the current transaction as a hit.

8. The cache of claim 7, wherein resolving the hazard condition further comprises:
in response to determining that the attribute data for the first transaction does not meet the third condition, determining if the attribute data for the second transaction meets a fourth condition, the fourth indication at least indicating that the second transaction has a same tag portion of the address as the current transaction and the second transaction will allocate an LRU way;
in response to determining that the second transaction meets the fourth condition, determining the hit determination for the current transaction as a hit; and
in response to determining that the second transaction does not meet the fourth condition, determining the hit determination for the current transaction as a miss.

9. A method for performing LRU replacement computation for a cache including multiple sets with each set having multiple respective ways, the method comprising:
reading tag data for the transaction and making a hit determination based on the tag data during a first stage;
reading LRU data for the transaction during a second stage;
performing an LRU replacement computation during a third stage;
upon the hit determination being a hit, providing resulting cache data before the third stage is complete;
**characterized in that** the method comprises the steps of maintaining attribute data for two previous transactions including a first transaction and a second transaction, wherein the first transaction precedes the second transaction and the second transaction precedes a current transaction; and
resolving a hazard condition for making the hit determination for the current transaction based on the attribute data, wherein resolving the hazard condition comprises:
upon the hit determination being a hit for the current transaction, determining if the attribute data for the first transaction meets a first condition, the first condition at least indicating that the first transaction will allocate an LRU way and the way information is still pending; and
in response to determining that the attribute data for the first transaction meets the first condition, determining the hit determination for the current transaction as pending.

10. The method of claim 9, further comprising:
upon the hit determination being a miss, issuing a read request to memory before the third stage is complete.

11. The method of claim 9, further comprising:
waiting for the LRU data to be read during an additional stage that occurs between the second stage and the third stage.

12. The method of claim 9, further comprising:
storing tag data in a tag data table and storing LRU data in an LRU data table, wherein the tag data table is separate from the LRU data table and optionally, wherein the tag data table and the LRU data table are implemented in separate memory devices.

13. The method of claim 9, wherein resolving the hazard condition further comprises:
in response to determining that the attribute data for the first transaction does not meet the first condition, determining if the attribute data for the second transaction meets a second condition, the second indication at least indicating that the second transaction has allocated an LRU way that matches a HIT way of the current transaction;
in response to determining that the second transaction meets the second condition, determining the hit determination for the current transaction as a miss; and
in response to determining that the second transaction does not meet the second condition, determining the hit determination for the current transaction as a hit.

14. The method of claim 9, wherein resolving the hazard condition comprises:
upon the hit determination being a miss for the current transaction, determining if the attribute data for the first transaction meets a third condition, the third condition at least indicating that the first transaction has a same tag portion of the address as the current transaction and the first transaction will allocate an LRU way; and
in response to determining that the attribute data for the first transaction meets the third condition, determining the hit determination for the current transaction as a hit.

15. The method of claim 14, wherein resolving the hazard condition further comprises:
in response to determining that the attribute data for the first transaction does not meet the third condition, determining if the attribute data for the second transaction meets a fourth condition, the fourth indication at least indicating that the second transaction has a same tag portion of the address as the current transaction and the second transaction will allocate an LRU way;
in response to determining that the second transaction meets the fourth condition, determining the hit determination for the current transaction as a hit; and
in response to determining that the second transaction does not meet the fourth condition, determining the hit determination for the current transaction as a miss.

## Patentansprüche

1. Cache, umfassend:
mehrere Sätze (110), wobei jeder Satz mehrere jeweilige Wege aufweist; und
eine Ersetzungslogik (125), die dazu ausgebildet ist, eine LRU-Ersetzungsrichtlinie auf der Grundlage einer LRU-Ersetzungsberechnung in mehreren Stufen für eine Transaktion zu implementieren, wobei die mehreren Stufen umfassen:
eine erste Stufe, in der der Cache Tag-Daten für die Transaktion liest und auf der Grundlage der Tag-Daten eine Trefferermittlung vornimmt,
eine zweite Stufe, in der der Cache LRU-Daten für die Transaktion liest,
eine dritte Stufe, in der der Cache eine LRU-Ersetzungsberechnung durchführt,
wobei der Cache, wenn die Trefferermittlung ein Treffer ist, dazu ausgebildet ist, resultierende Cache-Daten bereitzustellen, bevor die dritte Stufe abgeschlossen ist; **dadurch gekennzeichnet, dass** die Ersetzungslogik dazu ausgebildet ist:
Attributdaten (150) für zwei vorherige Transaktionen einschließlich einer ersten Transaktion und einer zweiten Transaktion vorzuhalten, wobei die erste Transaktion der zweiten Transaktion vorausgeht und die zweite Transaktion einer aktuellen Transaktion vorausgeht; und
eine Hazardbedingung für das Vornehmen der Trefferermittlung für die aktuelle Transaktion auf der Grundlage der Attributdaten aufzulösen, wobei das Auflösen der Hazardbedingung umfasst:
wenn die Trefferermittlung ein Treffer für die aktuelle Transaktion ist, Bestimmen, ob die Attributdaten für die erste Transaktion eine erste Bedingung erfüllen, wobei die erste Bedingung mindestens angibt, dass die erste Transaktion einen LRU-Weg zuteilen wird und die Weginformationen noch ausstehen; und
als Reaktion auf das Bestimmen, dass die Attributdaten für die erste Transaktion die erste Bedingung erfüllen, Bestimmen der Trefferermittlung für die aktuelle Transaktion als ausstehend.

2. Cache nach Anspruch 1, wobei der Cache dazu ausgebildet ist, wenn die Trefferermittlung ein Fehltreffer ist, eine Leseanforderung an einen Speicher auszugeben, bevor die dritte Stufe abgeschlossen ist.

3. Cache nach Anspruch 1, wobei die mehreren Stufen eine zusätzliche Stufe umfassen, die zwischen der zweiten Stufe und der dritten Stufe auftritt und während der der Cache darauf wartet, dass die LRU-Daten gelesen werden.

4. Cache nach Anspruch 1, wobei der Cache eine Tag-Datentabelle umfasst, die von einer LRU-Datentabelle getrennt ist, wobei die Tag-Datentabelle dazu ausgebildet ist, Tag-Daten zu speichern, und wobei die LRU-Datentabelle dazu ausgebildet ist, LRU-Daten zu speichern.

5. Cache nach Anspruch 4, wobei die Tag-Datentabelle und die LRU-Datentabelle in getrennten Speichervorrichtungen implementiert sind.

6. Cache nach Anspruch 1, wobei das Auflösen der Hazardbedingung ferner umfasst:
als Reaktion auf das Bestimmen, dass die Attributdaten für die erste Transaktion die erste Bedingung nicht erfüllen, Bestimmen, ob die Attributdaten für die zweite Transaktion eine zweite Bedingung erfüllen, wobei die zweite Angabe mindestens angibt, dass die zweite Transaktion einen LRU-Weg zugeteilt hat, der mit einem HIT-Weg der aktuellen Transaktion übereinstimmt;
als Reaktion auf das Bestimmen, dass die zweite Transaktion die zweite Bedingung erfüllt, Bestimmen der Trefferermittlung für die aktuelle Transaktion als Fehltreffer; und
als Reaktion auf das Bestimmen, dass die zweite Transaktion die zweite Bedingung nicht erfüllt, Bestimmen der Trefferermittlung für die aktuelle Transaktion als Treffer.

7. Cache nach Anspruch 1, wobei das Auflösen der Hazardbedingung umfasst:
wenn die Trefferermittlung ein Fehltreffer für die aktuelle Transaktion ist, Bestimmen, ob die Attributdaten für die erste Transaktion eine dritte Bedingung erfüllen, wobei die dritte Bedingung mindestens angibt, dass die erste Transaktion denselben Tag-Abschnitt der Adresse wie die aktuelle Transaktion aufweist und die erste Transaktion einen LRU-Weg zuteilen wird; und
als Reaktion auf das Bestimmen, dass die Attributdaten für die erste Transaktion die dritte Bedingung erfüllen, Bestimmen der Trefferermittlung für die aktuelle Transaktion als Treffer.

8. Cache nach Anspruch 7, wobei das Auflösen der Hazardbedingung ferner umfasst:
als Reaktion auf das Bestimmen, dass die Attributdaten für die erste Transaktion die dritte Bedingung nicht erfüllen, Bestimmen, ob die Attributdaten für die zweite Transaktion eine vierte Bedingung erfüllen, wobei die vierte Angabe mindestens angibt, dass die zweite Transaktion denselben Tag-Abschnitt der Adresse wie die aktuelle Transaktion aufweist und die zweite Transaktion einen LRU-Weg zuteilen wird;
als Reaktion auf das Bestimmen, dass die zweite Transaktion die vierte Bedingung erfüllt, Bestimmen der Trefferermittlung für die aktuelle Transaktion als Treffer; und
als Reaktion auf das Bestimmen, dass die zweite Transaktion die vierte Bedingung nicht erfüllt, Bestimmen der Trefferermittlung für die aktuelle Transaktion als Fehltreffer.

9. Verfahren zum Durchführen einer LRU-Ersetzungsberechnung für einen Cache, der mehrere Sätze beinhaltet, wobei jeder Satz mehrere jeweilige Wege aufweist, wobei das Verfahren umfasst:
Lesen von Tag-Daten für die Transaktion und Vornehmen einer Trefferermittlung auf der Grundlage der Tag-Daten während einer ersten Stufe;
Lesen von LRU-Daten für die Transaktion während einer zweiten Stufe;
Durchführen einer LRU-Ersetzungsberechnung während einer dritten Stufe;
wenn die Trefferermittlung ein Treffer ist, Bereitstellen resultierender Cache-Daten, bevor die dritte Stufe abgeschlossen ist;
**dadurch gekennzeichnet, dass** das Verfahren die Schritte umfasst:
Vorhalten von Attributdaten für zwei vorherige Transaktionen einschließlich einer ersten Transaktion und einer zweiten Transaktion, wobei die erste Transaktion der zweiten Transaktion vorausgeht und die zweite Transaktion einer aktuellen Transaktion vorausgeht; und
Auflösen einer Hazardbedingung für das Vornehmen der Trefferermittlung für die aktuelle Transaktion auf der Grundlage der Attributdaten, wobei das Auflösen der Hazardbedingung umfasst:
wenn die Trefferermittlung ein Treffer für die aktuelle Transaktion ist, Bestimmen, ob die Attributdaten für die erste Transaktion eine erste Bedingung erfüllen, wobei die erste Bedingung mindestens angibt, dass die erste Transaktion einen LRU-Weg zuteilen wird und die Weginformationen noch ausstehen; und
als Reaktion auf das Bestimmen, dass die Attributdaten für die erste Transaktion die erste Bedingung erfüllen, Bestimmen der Trefferermittlung für die aktuelle Transaktion als ausstehend.

10. Verfahren nach Anspruch 9, ferner umfassend:
wenn die Trefferermittlung ein Fehltreffer ist, Ausgeben einer Leseanforderung an einen Speicher, bevor die dritte Stufe abgeschlossen ist.

11. Verfahren nach Anspruch 9, ferner umfassend:
Warten darauf, dass die LRU-Daten gelesen werden, während einer zusätzlichen Stufe, die zwischen der zweiten Stufe und der dritten Stufe auftritt.

12. Verfahren nach Anspruch 9, ferner umfassend:
Speichern von Tag-Daten in einer Tag-Datentabelle und Speichern von LRU-Daten in einer LRU-Datentabelle, wobei die Tag-Datentabelle von der LRU-Datentabelle getrennt ist und optional, wobei die Tag-Datentabelle und die LRU-Datentabelle in getrennten Speichervorrichtungen implementiert sind.

13. Verfahren nach Anspruch 9, wobei das Auflösen der Hazardbedingung ferner umfasst:
als Reaktion auf das Bestimmen, dass die Attributdaten für die erste Transaktion die erste Bedingung nicht erfüllen, Bestimmen, ob die Attributdaten für die zweite Transaktion eine zweite Bedingung erfüllen, wobei die zweite Angabe mindestens angibt, dass die zweite Transaktion einen LRU-Weg zugeteilt hat, der mit einem HIT-Weg der aktuellen Transaktion übereinstimmt;
als Reaktion auf das Bestimmen, dass die zweite Transaktion die zweite Bedingung erfüllt, Bestimmen der Trefferermittlung für die aktuelle Transaktion als Fehltreffer; und
als Reaktion auf das Bestimmen, dass die zweite Transaktion die zweite Bedingung nicht erfüllt, Bestimmen der Trefferermittlung für die aktuelle Transaktion als Treffer.

14. Verfahren nach Anspruch 9, wobei das Auflösen der Hazardbedingung umfasst:
wenn die Trefferermittlung ein Fehltreffer für die aktuelle Transaktion ist, Bestimmen, ob die Attributdaten für die erste Transaktion eine dritte Bedingung erfüllen, wobei die dritte Bedingung mindestens angibt, dass die erste Transaktion denselben Tag-Abschnitt der Adresse wie die aktuelle Transaktion aufweist und die erste Transaktion einen LRU-Weg zuteilen wird; und
als Reaktion auf das Bestimmen, dass die Attributdaten für die erste Transaktion die dritte Bedingung erfüllen, Bestimmen der Trefferermittlung für die aktuelle Transaktion als Treffer.

15. Verfahren nach Anspruch 14, wobei das Auflösen der Hazardbedingung ferner umfasst:
als Reaktion auf das Bestimmen, dass die Attributdaten für die erste Transaktion die dritte Bedingung nicht erfüllen, Bestimmen, ob die Attributdaten für die zweite Transaktion eine vierte Bedingung erfüllen, wobei die vierte Angabe mindestens angibt, dass die zweite Transaktion denselben Tag-Abschnitt der Adresse wie die aktuelle Transaktion aufweist und die zweite Transaktion einen LRU-Weg zuteilen wird;
als Reaktion auf das Bestimmen, dass die zweite Transaktion die vierte Bedingung erfüllt, Bestimmen der Trefferermittlung für die aktuelle Transaktion als Treffer; und
als Reaktion auf das Bestimmen, dass die zweite Transaktion die vierte Bedingung nicht erfüllt, Bestimmen der Trefferermittlung für die aktuelle Transaktion als Fehltreffer.

## Revendications

1. Cache comprenant :
plusieurs ensembles (110), chaque ensemble ayant plusieurs voies respectives ; et
une logique de remplacement (125) configurée pour mettre en œuvre une politique de remplacement LRU sur la base d'un calcul de remplacement LRU en plusieurs étapes pour une transaction, les plusieurs étapes comprenant :
une première étape dans laquelle le cache lit des données d'étiquette de la transaction et effectue une détermination de correspondance sur la base des données d'étiquette,
une deuxième étape dans laquelle le cache lit les données LRU de la transaction,
une troisième étape dans laquelle le cache réalise un calcul de remplacement LRU,
dans lequel si la détermination de correspondance est une correspondance, le cache est configuré pour fournir les données de cache résultantes avant que la troisième étape ne soit terminée ;
**caractérisé en ce que** la logique de remplacement est configurée pour :
conserver des données d'attribut (150) pour deux transactions précédentes comportant une première transaction et une seconde transaction, dans lequel la première transaction précède la seconde transaction et la seconde transaction précède une transaction actuelle ; et
résoudre une condition de risque pour effectuer la détermination de correspondance pour la transaction actuelle sur la base des données d'attribut, dans lequel la résolution de la condition de risque comprend :
si la détermination de correspondance est une correspondance pour la transaction actuelle, le fait de déterminer si les données d'attribut de la première transaction satisfont à une première condition, la première condition indiquant au moins que la première transaction allouera une voie LRU et que les informations de voie sont toujours en attente ; et
en réponse à la détermination que les données d'attribut de la première transaction satisfont à la première condition, la détermination que la détermination de correspondance pour la transaction actuelle est en attente.

2. Cache selon la revendication 1, dans lequel si la détermination de correspondance n'est pas une correspondance, le cache est configuré pour émettre une requête de lecture à la mémoire avant que la troisième étape ne soit terminée.

3. Cache selon la revendication 1, dans lequel les multiples étapes comprennent une étape supplémentaire qui se produit entre la deuxième étape et la troisième étape au cours de laquelle le cache attend que les données LRU soient lues.

4. Cache selon la revendication 1, dans lequel le cache comprend une table de données d'étiquette qui est distincte d'une table de données LRU, dans lequel la table de données d'étiquette est configurée pour stocker des données d'étiquette et dans lequel la table de données LRU est configurée pour stocker des données LRU.

5. Cache selon la revendication 4, dans lequel la table de données d'étiquette et la table de données LRU sont mises en œuvre dans des dispositifs de mémoire distincts.

6. Cache selon la revendication 1, dans lequel la résolution de la condition de risque comprend en outre :
en réponse à la détermination que les données d'attribut de la première transaction ne satisfont pas à la première condition, le fait de déterminer si les données d'attribut de la seconde transaction satisfont à une deuxième condition, la deuxième indication indiquant au moins que la seconde transaction a alloué une voie LRU qui correspond à une voie HIT de la transaction actuelle ;
en réponse à la détermination que la seconde transaction satisfait à la deuxième condition, la détermination que la détermination de correspondance pour la transaction actuelle n'est pas une correspondance ; et
en réponse à la détermination que la seconde transaction ne satisfait pas à la deuxième condition, la détermination que la détermination de correspondance pour la transaction actuelle est une correspondance.

7. Cache selon la revendication 1, dans lequel la résolution de la condition de risque comprend :
si la détermination de correspondance n'est pas une correspondance pour la transaction actuelle, le fait de déterminer si les données d'attribut de la première transaction satisfont à une troisième condition, la troisième condition indiquant au moins que la première transaction a une même partie d'étiquette de l'adresse que la transaction actuelle et que la première transaction allouera une voie LRU ; et
en réponse à la détermination que les données d'attribut de la première transaction satisfont à la troisième condition, la détermination que la détermination de correspondance pour la transaction actuelle est une correspondance.

8. Cache selon la revendication 7, dans lequel la résolution de la condition de risque comprend en outre :
en réponse à la détermination que les données d'attribut de la première transaction ne satisfont pas à la troisième condition, le fait de déterminer si les données d'attribut de la seconde transaction satisfont à une quatrième condition, la quatrième indication indiquant au moins que la seconde transaction a une même partie d'étiquette de l'adresse que la transaction actuelle et que la seconde transaction allouera une voie LRU ;
en réponse à la détermination que la seconde transaction satisfait à la quatrième condition, la détermination que la détermination de correspondance pour la transaction actuelle est une correspondance ; et
en réponse à la détermination que la seconde transaction ne satisfait pas à la quatrième condition, la détermination que la détermination de correspondance pour la transaction actuelle n'est pas une correspondance.

9. Procédé permettant de réaliser un calcul de remplacement LRU pour un cache comportant plusieurs ensembles, chaque ensemble ayant plusieurs voies respectives, le procédé comprenant :
la lecture de données d'étiquette de la transaction et le fait d'effectuer une détermination de correspondance sur la base des données d'étiquette au cours d'une première étape ;
la lecture de données LRU de la transaction au cours d'une deuxième étape ;
la réalisation d'un calcul de remplacement LRU au cours d'une troisième étape ;
si la détermination de correspondance est une correspondance, la fourniture de données de cache résultantes avant que la troisième étape ne soit terminée ;
**caractérisé en ce que** le procédé comprend les étapes de conservation des données d'attribut pour deux transactions précédentes comportant une première transaction et une seconde transaction, dans lequel la première transaction précède la seconde transaction et la seconde transaction précède une transaction actuelle ; et
de résolution d'une condition de risque pour effectuer la détermination de correspondance pour la transaction actuelle sur la base des données d'attribut, dans lequel la résolution de la condition de risque comprend :
si la détermination de correspondance est une correspondance pour la transaction actuelle, le fait de déterminer si les données d'attribut de la première transaction satisfont à une première condition, la première condition indiquant au moins que la première transaction allouera une voie LRU et que les informations de voie sont toujours en attente ; et
en réponse à la détermination que les données d'attribut de la première transaction satisfont à la première condition, la détermination que la détermination de correspondance pour la transaction actuelle est en attente.

10. Procédé selon la revendication 9, comprenant en outre : si la détermination de correspondance n'est pas une correspondance, l'émission d'une requête de lecture à la mémoire avant que la troisième étape ne soit terminée.

11. Procédé selon la revendication 9, comprenant en outre : le fait d'attendre que les données LRU soient lues au cours d'une étape supplémentaire qui se produit entre la deuxième étape et la troisième étape.

12. Procédé selon la revendication 9, comprenant en outre : le stockage de données d'étiquette dans une table de données d'étiquette et le stockage de données LRU dans une table de données LRU, dans lequel la table de données d'étiquette est distincte de la table de données LRU et, éventuellement, dans lequel la table de données d'étiquette et la table de données LRU sont mises en œuvre dans des dispositifs de mémoire distincts.

13. Procédé selon la revendication 9, dans lequel la résolution de la condition de risque comprend en outre :
en réponse à la détermination que les données d'attribut de la première transaction ne satisfont pas à la première condition, le fait de déterminer si les données d'attribut de la seconde transaction satisfont à une deuxième condition, la deuxième indication indiquant au moins que la seconde transaction a alloué une voie LRU qui correspond à une voie HIT de la transaction actuelle ;
en réponse à la détermination que la seconde transaction satisfait à la deuxième condition, la détermination que la détermination de correspondance pour la transaction actuelle n'est pas une correspondance ; et
en réponse à la détermination que la seconde transaction ne satisfait pas à la deuxième condition, la détermination que la détermination de correspondance pour la transaction actuelle est une correspondance.

14. Procédé selon la revendication 9, dans lequel la résolution de la condition de risque comprend :
si la détermination de correspondance n'est pas une correspondance pour la transaction actuelle, le fait de déterminer si les données d'attribut de la première transaction satisfont à une troisième condition, la troisième condition indiquant au moins que la première transaction a une même partie d'étiquette de l'adresse que la transaction actuelle et que la première transaction allouera une voie LRU ; et
en réponse à la détermination que les données d'attribut de la première transaction satisfont à la troisième condition, la détermination que la détermination de correspondance pour la transaction actuelle est une correspondance.

15. Procédé selon la revendication 14, dans lequel la résolution de la condition de risque comprend en outre :
en réponse à la détermination que les données d'attribut de la première transaction ne satisfont pas à la troisième condition, le fait de déterminer si les données d'attribut de la seconde transaction satisfont à une quatrième condition, la quatrième indication indiquant au moins que la seconde transaction a une même partie d'étiquette de l'adresse que la transaction actuelle et que la seconde transaction allouera une voie LRU ;
en réponse à la détermination que la seconde transaction satisfait à la quatrième condition, la détermination que la détermination de correspondance pour la transaction actuelle est une correspondance ; et
en réponse à la détermination que la seconde transaction ne satisfait pas à la quatrième condition, la détermination que la détermination de correspondance pour la transaction actuelle n'est pas une correspondance.
